Europäisches Patentamt

European Patent Office

Office européen des brevets

(11) Numéro de publication: **0 449 202 A1**

## (12) DEMANDE DE BREVET EUROPEEN

(21) Numéro de dépôt: **91104759.5**

(22) Date de dépôt: **26.03.91**

(51) Int. Cl.5: **G02B 6/12**, G02B 6/28, H04B 10/20

(30) Priorité: **28.03.90 FR 9003955**

(43) Date de publication de la demande:
**02.10.91 Bulletin 91/40**

(84) Etats contractants désignés:
**CH DE ES FR GB IT LI NL SE**

(71) Demandeur: **ALCATEL FIBRES OPTIQUES**
**35 rue Jean Jaurès, BP 20**
**F-95871 Bezons Cedex(FR)**
(84) **CH DE FR GB IT LI NL**

Demandeur: **ALCATEL N.V.**
**Strawinskylaan 341 (World Trade Center)**
**NL-1077 XX Amsterdam(NL)**

(84) **ES SE**

(72) Inventeur: **Hakoun, Roland**
**4 Place Raspail**
**F-95330 Domont(FR)**
Inventeur: **Tanguy, Eric**
**81, rue Blomet**
**F-75015 Paris(FR)**
Inventeur: **Neusius, Thierry**
**38, Place du bois des grives**
**F-95220 Herblay(FR)**

(74) Mandataire: **Weinmiller, Jürgen et al**
**Lennéstrasse 9 Postfach 24**
**W-8133 Feldafing(DE)**

(54) **Coupleur bidirectionnel en optique intégrée monomode.**

(57) Le coupleur bidirectionnel est constitué par un coupleur à jonction en Y et un coupleur directif (4) en série, les deux branches (5, 6) du coupleur directif (4) étant reliées aux deux branches (2, 3) du coupleur à jonction en Y. Le coupleur bidirectionnel peut être inséré dans un bus optique pour injecter un signal optique sur le bus, ou être utilisé, avec d'autres coupleurs bidirectionnels pour constituer un coupleur multiple à étages.

# FIG.3

EP 0 449 202 A1

L'invention concerne les dispositifs optiques utilisables dans les transmissions par fibres optiques.

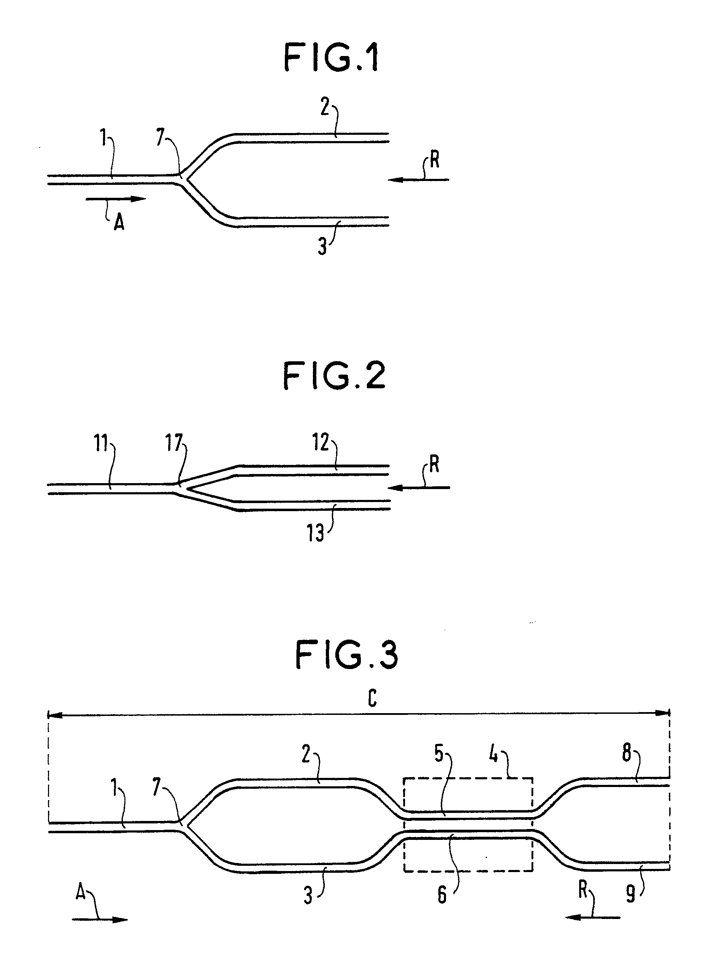

Les coupleurs en Y en optique intégrée sont connus et sont constitués, figure 1, par une branche commune 1 et deux branches 2 et 3 réunies par une jonction 7 à la branche commune 1. Dans cette figure 1 les branches 2 et 3 sont éloignées l'une de l'autre et non couplées entre elles, et l'onde se propageant sur la branche commune 1, selon le sens repéré par la flèche A, se scinde au niveau de la jonction 7 pour présenter deux ondes identiques dont chacune se propage sur une branche, 2 et 3, du coupleur.

Dans le sens retour, repéré par la flèche R, une onde se propageant sur une branche, la branche 2 par exemple, aucune énergie n'étant appliquée à l'autre branche, (branche 3), va, au passage de la jonction 7, subir une atténuation en puissance de 3dB;la puissance sur la branche commune 1 est alors systématiquement la moitié de la puissance incidente sur la branche 2.

Dans un coupleur en Y, en optique intégrée, figure 2, dont les branches 12 et 13, reliées à la branche commune 11 par la jonction 17 sont suffisamment proches l'une de l'autre, les ondes se propageant dans ces branches 12 et 13 sont couplées.

Dans les figures 1 et 2 les branches communes 1 et 11, et les branches 2, 3, 12, 13 sont des guides d'ondes en optique intégrée, comme cela est connu de l'homme de l'art.

L'inconvénient du coupleur à jonction Y de la figure 2 réside dans le fait qu'il est extrêmement difficile de calculer la longueur des branches 12 et 13, appelée longueur d'interaction, du fait de la jonction 17. Au niveau de la jonction 17, le couplage des ondes se propageant dans les branches 12 et 13 selon la direction reperée par la flèche R change de nature, et de faible il devient fort. Seules les ondes égales en puissance et en phase vont s'ajouter dans la branche commune 11, mais la non connaissance de la longueur d'interaction ne permet pas d'égaliser les ondes à la jonction 17 sans ajustement externe, du type électro-optique par exemple.

L'invention a pour but de ne pas perdre, ou à tout le moins de réduire les pertes, d'énergie au passage de la jonction entre les branches d'un coupleur en Y.

Ce but est atteint en égalisant les puissances au niveau de ladite jonction.

L'invention a pour objet un coupleur bidirectionnel en optique monomode intégrée ayant une entrée et deux sorties , caractérisé par le fait qu'il est constitué par un coupleur à jonction en Y associé à un coupleur directif, le coupleur à jonction en Y ayant une branche commune qui constitue l'entrée du coupleur bidirectionnel, une première branche reliée à une première branche du coupleur directif et une seconde branche reliée à une deuxième branche dudit coupleur directif que les première et deuxième branches du coupleur directif sont reliées à une première et une deuxième sorties, respectivement, et que la première branche du coupleur à jonction en Y, la première branche du coupleur directif et la première sortie constituent un guide d'ondes, la seconde branche du coupleur à jonction en Y, la deuxième branche du coupleur directif et la deuxième sortie constituent un autre guide d'ondes, lesdits guides d'ondes constituant après leur jonction la base commune du coupleur à jonction en Y.

L'invention a également pour objet un coupleur bidirectionnel relié en série avec un bus optique.

L'invention a aussi pour objet un coupleur multiple à étages.

L'invention sera bien comprise par la description qui va suivre d'un exemple de réalisation illustré par les figures annexées dans lesquelles :
- La figure 3 représente l'architecture d'un coupleur bidirectionnel de l'invention.
- La figure 4 représente une architecture multiple de coupleurs de l'invention.
- La figure 5 représente une architecture de bus optique relié à des dispositifs par des coupleurs de l'invention.

Le coupleur bidirectionnel de l'invention, représenté figure 3, est constitué par l'association d'un coupleur à jonction en Y, 1, 7, 2, 3, et d'un coupleur directif 4, à deux branches 5, 6, parallèles et proches l'une de l'autre, ces deux coupleurs étant réalisés en optique intégrée. Les branches 2 et 3 du coupleur à jonction en Y sont reliées aux branches 5 et 6, respectivement, du coupleur directif 4, et lesdites branches 5 et 6 du coupleur directif 4 sont reliées à deux sorties 8 et 9, respectivement. Depuis la jonction 7, les branches 2 et 5 et la sortie 8 constituent un guide d'ondes, et les branches 3 et 6 et la sortie 9 constituent un autre guide d'onde. La branche commune 1 du coupleur à jonction en Y constitue également un guide d'ondes.

Dans le sens aller, flèche A, l'onde présente sur la branche commune 1 se divise au niveau de la jonction 7 pour se répartir également sur les branches 2 et 3 qui sont suffisamment éloignées l'une de l'autre pour que les ondes ne soient pas couplées. Le coupleur directif 4 a une longueur d'interaction $(n + 1/2)$ fois la longueur de couplage, n étant un nombre entier; les deux ondes issues des branches 2 et 3 se propagent dans les branches 5 et 6 sans pour autant dissymétriser l'ensemble.

Ainsi aux sorties 8 et 9 les puissances sont égales et chacune est égale à la moitié de la puissance incidente, c'est-à-dire à la moitié de la puissance de l'onde sur la branche commune 1.

Dans le sens retour, flèche R, toute l'énergie est confinée sur l'une des sorties 8 ou 9. Au passage du coupleur directif 4, les composantes des modes propres symétrique et antisymétrique de l'onde deviennent telles qu'il y a répartition de puissance entre les branches 5 et 6 du coupleur directif 4 de sorte qu'en sortie du coupleur 4 il y a répartition de puissance sur les branches 2 et 3 avec égalité des amplitudes. De ce fait, au niveau de la jonction 7 seul le mode symétrique est présent et toute la puissance passe dans la branche commune 1; on retrouve donc, dans cette branche commune 1 toute la puissance de l'onde injectée sur l'une des sorties 8 ou 9.

Le coupleur bidirectionnel de l'invention permet donc d'égaliser, dans le sens retour, les puissances au niveau de la jonction 7 du coupleur à jonction en Y, et de ne pas perdre d'énergie au passage de cette jonction.

Ainsi la présence du coupleur directif 4 ne modifie pas le fonctionnement du coupleur à jonction en Y dans le sens aller puisqu'on retrouve sur les sorties 8 et 9 des ondes ayant même puissance que dans les branches 2 et 3 du coupleur à jonction en Y. Par contre pour le sens retour, flèche R, les deux branches 2 et 3 du coupleur à jonction en Y sont parcourues chacune par une onde issue des branches 5 et 6 du coupleur directif 4, et la branche commune 1 est parcourue par une onde dont la puissance est la somme des puissances des ondes sur les branches 2 et 3. Alors que dans le coupleur à jonction en Y de la figure 1 la puissance de l'onde sur la branche commune 1 était la moitié de la puissance de l'onde sur l'une des sorties 8 ou 9, dans le sens retour, dans le coupleur de l'invention on retrouve la même puissance; il n'y a donc pas affaiblissement de l'onde dans le sens retour.

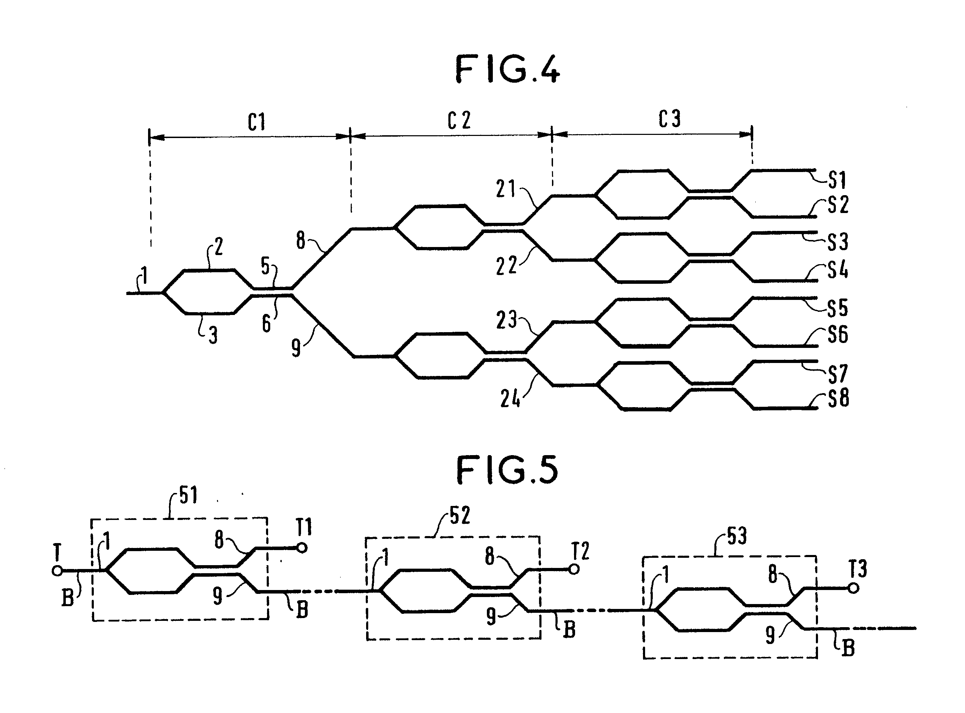

Le coupleur de l'invention peut être utilisé seul, ou associé à d'autres coupleurs du même type pour obtenir un coupleur à 4, 8,..., $2^n$ sorties, n étant le nombre d'étages en cascades. La figure 4 représente schématiquement une architecture d'un coupleur multiple à une entrée 1 et huit sorties S1 à S8, constitué de trois étages C1, C2, C3, de coupleurs en cascades. Le premier étage C1 est constitué par un coupleur C de l'invention, tel que représenté figure 3. Le deuxième étage C2 est constitué de deux coupleurs C de l'invention, et le troisième étage C3 est constitué de quatre coupleurs C de l'invention. Dans un étage, à l'exception du dernier étage, un coupleur a sa première sortie reliée à la branche commune d'un coupleur de l'étage suivant et sa deuxième sortie reliée à la branche commune d'un autre coupleur dudit étage suivant;les sorties des coupleurs du dernier étage constituant les sorties du coupleur multiple.

Dans un tel coupleur à structure multiple une onde sur la branche commune 1 du coupleur du premier étage C1 se retrouve sur chaque sortie S1 à S8 avec une puissance divisée par huit; une onde sur une sortie se retrouve avec la même puissance sur la branche commune 1 du coupleur du premier étage C1.

Le coupleur de l'invention permet l'injection d'un signal optique sur un bus optique. La figure 5 représente un bus optique B et des coupleurs 51, 52, 53 en série avec ledit bus. Chaque coupleur est du type représenté figure 3, et sa mise en série avec le bus B se fait en reliant sa branche commune 1 au bus et une de ses sorties, 9 par exemple, au bus; l'autre sortie, 8 est reliée à une borne, T1, T2, T3; chaque borne est reliée à un dispositif qui délivre un signal optique qui est injecté sur le bus par le coupleur correspondant; le signal se retrouve à la borne T du bus, borne qui est reliée à un dispositif central. Le bus peut comporter un ou plusieurs coupleurs en série, comme représenté figure 5. Le dispositif central relié à la borne T reçoit les différentes signaux des dispositifs reliés aux bornes T1, T2, T3; un tel bus optique sert par exemple à collecter des signaux d'alarmes, d'erreurs, etc...provenant des dispositifs reliés aux bornes T1, T2, T3 des coupleurs.

## Revendications

1. Coupleur bidirectionnel en optique monomode intégrée ayant une entrée et deux sorties , caractérisé par le fait qu'il est constitué par un coupleur à jonction en Y (1, 7, 2, 3) associé à un coupleur directif (4), le coupleur à jonction en Y ayant une branche commune (1) qui constitue l'entrée du coupleur bidirectionnel, une première branche (2) reliée à une première branche (5) du coupleur directif (4) et une seconde branche (3) reliée à une deuxième branche (6) dudit coupleur directif, que les première (5) et deuxième (6) branches du coupleur directif sont reliées à une première (8) et une deuxième (9) sorties, respectivement, et que la première branche (2) du coupleur à jonction en Y, la première branche (5) du coupleur directif (4) et la première sortie (8) constituent un guide d'ondes, la seconde branche (3) du coupleur à jonction en Y, la deuxième branche (6) du coupleur directif (4) et la deuxième sortie (9) constituent un autre guide d'ondes, lesdits guides d'ondes constituant après leur jonction la base commune (1) du coupleur à jonction en Y.

2. Coupleur bidirectionnel selon la revendication 1, caractérisé par le fait qu'il est inséré en série dans un bus optique (B) en reliant sa branche commune (1) audit bus, et une de ses sorties (8; 9) au dit bus, l'autre sortie étant reliée à une borne de sortie (T1) sur laquelle un signal optique est appliqué pour être transmis par le bus.

3.  Coupleur multiple à étages (C1, C2, C3), ayant une entrée et $2^n$ sorties, n étant le nombre d'étages, caractérisé par le fait qu'il est constitué par des coupleurs bidirectionnels selon la revendication 1, que chaque coupleur bidirectionnel d'un étage, à l'exception du dernier étage, ayant sa première sortie (8) reliée à la branche commune (1) d'un coupleur bidirectionnel de l'étage suivant et sa deuxième sortie (9) reliée à la branche commune (1) d'un autre coupleur bidirectionnel dudit étage suivant, et que chaque première et deuxième sorties des coupleurs bidirectionnels du dernier étage constituent les $2^n$ sorties du coupleur multiple.

# FIG.1

# FIG.2

# FIG.3

FIG.4

FIG.5

Office européen
des brevets

**RAPPORT DE RECHERCHE
EUROPEENNE**

Numéro de la demande

**EP 91 10 4759**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN vol 10, no 30 (P426), 5 février 1986 <br> & JP-A-60179704 (FUJITSU KK) 13 septembre 1985 <br> – – – | 1 | G 02 B 6/12 <br> G 02 B 6/28 <br> H 04 B 10/20 |
| A | PATENT ABSTRACTS OF JAPAN vol 10, no 260 (P494) 5 septembre 1986 <br> & JP-A-61086710 (NIPPON SHEET GLASS) 02 mai 1986) <br> – – – | 1 | |
| A | PATENT ABSTRACTS OF JAPAN vol 11, no 395 (P650) 24 décembre 1987 <br> & JP-A-62160405 (SUMITOMO) 16 juillet 1987 <br> – – – – – | 1 | |

|  |
|---|
| **DOMAINES TECHNIQUES RECHERCHES (Int. Cl.5)** |
| G 02 B <br> H 04 B |

Le présent rapport de recherche a été établi pour toutes les revendications

| Lieu de la recherche | Date d'achèvement de la recherche | Examinateur |
|---|---|---|
| Berlin | 27 mai 91 | HYLLA W R |